Europäisches Patentamt

European Patent Office

Office européen des brevets

(19)

(11) Veröffentlichungsnummer: **0 197 027**
**A2**

(12) # EUROPÄISCHE PATENTANMELDUNG

(21) Anmeldenummer: 86890085.3

(22) Anmeldetag: 02.04.86

(51) Int. Cl.⁴: **F 24 D 3/08**

---

(30) Priorität: 03.04.85 AT 1004/85

(43) Veröffentlichungstag der Anmeldung:
08.10.86 Patentblatt 86/41

(84) Benannte Vertragsstaaten:
BE CH DE LI NL SE

(71) Anmelder: Swaty, Franz, Dipl. Ing.
Pulverturmgasse 7
A-1090 Wien(AT)

(72) Erfinder: Swaty, Franz, Dipl. Ing.
Pulverturmgasse 7
A-1090 Wien(AT)

(74) Vertreter: Barger, Erich et al,
Patentanwälte Dipl.-Ing. Erich Barger Dipl.-Ing. Hermann
Krick Biberstrasse 15
A-1010 Wien(AT)

---

(54) Gebrauchswarmwasserbereitung.

(57) Gebrauchswarmwasserbereitung in mehrere Wohneinheiten umfassenden Wohnhäusern mit Hauszentralheizungsanlagen, insbesondere mit fernwärmebetriebenen
Zentralheizungsanlagen, wobei die Warmwasserbereitung
dezentral, vorzugsweise für jede Wohneinheit für sich,
mittels eines von Vor- und Rücklauf der Heizungsanlage
betriebenen Wärmetauschers erfolgt.

EP 0 197 027 A2

Croydon Printing Company Ltd.

Ⓢ197027

## Gebrauchswarmwasserbereitung

Die Erfindung betrifft eine Gebrauchswarmwasserbereitung in mehrere Wohneinheiten umfassenden Wohnhäusern mit Hauszentralheizungsanlagen, insbesondere mit Fernwärme betriebenen Zentralheizungsanlagen. Solche Wohnhäuser sind meist auch mit zentraler Warmwasserbereitung ausgerüstet, wobei der Nachteil besteht, daß neben dem aufwendigen Rohrnetz mit Zuleitung von Warmwasser, den Zirkulationsleitungen und den notwendigen Regeleinrichtungen, die vorgesehen sein müssen, der für die Aufwärmung des Gebrauchswassers von rund 10°C auf 45°C bis 50°C notwendige theoretische Wärmeaufwand um das Zweibis Dreifache und in einigen Fällen darüber überschritten wird.

Die Erfindung bezweckt, die Vergeudung von Wärmeenergie zu beseitigen. Ihr liegt der Gedanke zugrunde, auch bei solchen Hauszentralheizungen die Warmwasserbereitung dezentral vorzunehmen und eine vorhandene zentrale Warmwasserbereitung stillzulegen. Die erfindungsgemäße Lösung der gestellten Aufgabe besteht darin, daß die Warmwasserbereitung dezentral, vorzugsweise für jede Wohneinheit für sich, mittels eines von Vor- und Rücklauf der Heizungsanlage betriebenen Wärmetauschers erfolgt.

Die Erfindung bezieht sich ferner auf Ausgestaltungen dieser Gebrauchswasserbereitung.

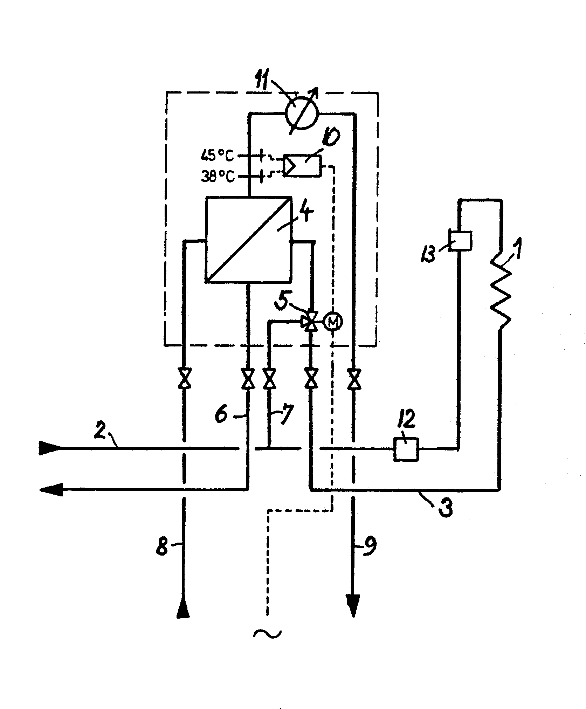

In der Zeichnung ist die Erfindung schematisch in einem Schaltbild veranschaulicht.

Die Wohnungsheizung ist durch eine Heizschlange 1 angedeutet, zu der eine Vorlaufleitung 2 führt und von der die Rücklaufleitung 3 ausgeht. Diese mündet in den Wärmetauscher 4, wobei ein magnetisch gesteuertes Dreiwegventil 5 zwischengeschaltet ist. Vom Wärmetauscher 4 führt eine Leitung 6 als Rücklaufleitung zur nicht dargestellten Hauszentralheizung.

Von der Vorlaufleitung 2 geht eine Zweigleitung 7 zum Dreiwegventil 5.

Dem Wärmetauscher 4 wird Kaltwasser mittels der Leitung 8 zugeführt und das warme Gebrauchswasser durch die Leitung 9 den Verbraucherstellen zugeführt. In diese Leitung sind zwei Wärmefühler eingeschaltet, die ein Schaltgerät 10 steuern. Der eine Wärmefühler wird z.B. bei $38^{o}$C und der andere bei $45^{o}$C wirksam. Schließlich ist in der Leitung 9 noch ein Wärmezähler 11 eingebaut.

In jeder Wohnung ist die zur Verfügung stehende Heizleistung durch den Anschlußwert der Zentralheizung gegeben. Durch diesen Anschlußwert ist bei einer maximalen Vorlauf- und Rücklauftemperatur von $90^{o}$C bzw. $70^{o}$C eine bestimmte Heizwassermenge vorgegeben, die durch ein Drosselorgan 12 eingestellt wird. Darüberhinaus kann durch ein weiteres Regulierventil 13 die Heizwassermenge individuell herabgesetzt werden, wenn tiefere Raumtemperaturen gewünscht werden. Die Vorlauftemperatur wird von der Heizungszentrale in Abhängigkeit von der Außentemperatur angepaßt, wobei jedoch $60^{o}$C im allgemeinen nicht unterschritten werden. Die Rücklauftemperatur beträgt dann etwa $50^{o}$C. Zum Erwärmen des Gebrauchswassers steht sodann eine von der Rücklauftemperatur und der maximalen Heizwassermenge abhängige Heizleistung zur Verfügung. Der Wärmetauscher ist so auszulegen, daß rund 7 Liter Gebrauchswasser pro Minute mit einer Temperatur zwischen $40^{o}$C und $45^{o}$C abgegeben wird. Um auch größere Mengen und/bzw. oder höhere Temperaturen vorübergehend zu erreichen, wird durch das Dreiwegventil 5 der Wärmetauscher an die Vorlaufleitung angeschlossen, so daß sich eine höhere Eintrittstemperatur am Wärmetauscher einstellt. Nachdem die Zweigleitung 7 vor der Drosselstelle 12 von der Vorlaufleitung abzweigt, wird auch die Menge des durchlaufenden Heizwassers im Wärmetauscher in Abhängigkeit von der Druckdifferenz in der Vor- und Rücklaufleitung auf das Zwei- bis Dreifache erhöht. Es ist daher zweckmäßig, die Verbindung des Wärmetauschers mit der Vor- und Rücklaufleitung widerstandsarm auszubilden. Durch die Erhöhung der Temperaturdifferenz des Heizwassers am Eintritt und Austritt des Wärmetauschers und durch die Erhöhung der Durchsatzmenge wird eine wesentliche Steigerung der Warmwasserumformerleistung erreicht. Es ist hiebei zweckmäßig, einen einstellbaren Doppelthermostat 10 zu verwenden.

Durch die Erfindung kann nicht nur eine Energievergeudung bei den bestehenden Hauszentralheizungen durch Stillegung der zentralen Warmwasserbereitung vermieden werden, sondern die Erfindung kann auch in Wohnhäusern angewendet werden, die nachträglich mit einer Hauszentralheizung versehen werden. In solchen Wohnungen sind meist Elektrowarmwasserspeicher oder Gasdurchlauferhitzer zur Gebrauchswasserbereitung installiert. Diese Geräte können in einfacher Weise durch den erfindungsgemäßen Wärmetauscher ersetzt werden. Das gleiche gilt für Wohnungen, die bereits an eine Hauszentralheizung angeschlossen sind, welche jedoch keine zentrale Warmwasserbereitung aufweisen. Die Vorteile der erfindungsgemäßen Warmwasserbereitung sind:

1. Ein Verschleiß und eine Verkalkung des Umformers ist nicht gegeben, da hier nicht hohe Temperaturen von dem Umformer gefordert werden.

2. Es wird die Heizleistung der Wohnung, auch wenn sie klein ist, für die Warmwasserbereitung eingesetzt. Genügt diese Leistung nicht, so wird durch Vorlaufbeaufschlagung des Umformers und größerer Heizwasserdurchsatz die Leistung erheblich vergrößert. Durch die Regelung der durchgesetzten Gebrauchswarmwassermenge, die vom Zapfhahn bestimmt werden kann, können höhere Gebrauchswassertemperaturen bei kleinerer Wassermenge als 7 Minuten/l entnommen werden.

3. Bei der Fernwärmenutzung, d.h. in Verband mit Wärmekraftkupplung, wird die Rücklauftemperatur des Heizungswassers weiter abgesenkt, ein Vorgang, der für die Wärmekraftkupplung nur positive Auswirkungen hat.

4. Ein zusätzliches Rohrnetz muß nicht vorgesehen werden, sondern der Warmwasserbereiter wird nur an Vor- und Rücklauf in der gezeigten Form angeschlossen und ändert sonst an dem Rohrnetz der Heizung, bzw. auch im Warmwasserrohrnetz nichts.

5. Sämtliche Verlustwärmen, die bei dieser Warmwasserbereitung entstehen, kommen dem Raum, z.B. Küche oder Vorraum zugute, so daß hier eine optimale Wirtschaftlichkeit des gesamten Systems vorgegeben ist.

6. Der Umformer ist so klein, daß er in einer Küchenverbauung leicht unterzubringen, gut zu warten und gut zu überwachen ist und die Ablesung ohne Schwierigkeiten durchgeführt werden kann.

Die Erfindung ist nicht auf das dargestellte Ausführungsbeispiel beschränkt. So können auch gewerblich genutzte Räume in gleicher Weise mit Heizwärme und Gebrauchswasserbereitung versorgt werden. Der Wärmetauscher soll eine möglichst große "thermische Länge" aufweisen, um das Heizwasser optimal zu nutzen. Die Anschlüsse an den Wärmetauscher sollen daher an einer Seite liegen.

Patentansprüche:

1. Gebrauchswarmwasserbereitung in mehrere Wohneinheiten umfassenden Wohnhäusern mit Hauszentralheizungsanlagen, insbesondere mit fernwärmebetriebenen Zentralheizungsanlagen, dadurch gekennzeichnet, daß die Warmwasserbereitung dezentral, vorzugsweise für jede Wohneinheit für sich, mittels eines von Vor- und Rücklauf der Heizungsanlage betriebenen Wärmetauschers erfolgt.

2. Gebrauchswarmwasserbereitung nach Anspruch 1, dadurch gekennzeichnet, daß der Einlaß des Heizmediums zum Wärmetauscher mittels eines, vorzugsweise in Abhängigkeit von der Temperatur des Gebrauchswarmwassers gesteuerten Dreiwegventils wahlweise an die Rücklaufleitung oder an die Vorlaufleitung anschließbar ist.

3. Gebrauchswarmwasserbereitung nach Anspruch 1 oder 2, dadurch gekennzeichnet, daß der Umformer im exakten Gegenstrom zwischen Heizwasser und aufzuwärmendem Gebrauchswarmwasser ausgelegt ist.

4. Gebrauchswarmwasserbereitung nach Anspruch 1, 2 oder 3, dadurch gekennzeichnet, daß der Wärmetauscher heizwasserseitig widerstandsarm ausgebildet ist.